# EUROPEAN PATENT SPECIFICATION

(11) **EP 2 139 782 B1**
(45) Date of publication and mention of the grant of the patent: **10.04.2013**
(21) Application number: 08730131.3
(22) Date of filing: 19.02.2008
(51) Int. Cl.: B65D 51/20

(54) **LAMINATED CONTAINER SEAL WITH REMOVAL TAB BOUND BY ADHESIVE**
LAMINIERTES BEHÄLTERSIEGEL MIT DURCH KLEBSTOFF VERBUNDENER ENTFERNBARER LASCHE
JOINT À LANGUETTE D'ENLÈVEMENT LIÉE PAR ADHÉSIF POUR CONTENANT STRATIFIÉ

(30) Priority: 23.03.2007 US 896827 P; 06.02.2008 US 26691
(43) Date of publication of application: 06.01.2010
(73) Proprietor: Selig Sealing Products, Inc., Forrest, IL 61741 (US)
(72) Inventor: THORSTENSEN-WOLL, Robert, William, Barrie, Ontario, L4N 0Y9 (CA)
(74) Representative: Carpmael, Robert Maurice Charles
(86) International application number: PCT/US2008/054270
(87) International publication number: WO 2008/118563

(56) References cited:
- WO-A-97/02997
- WO-A-03/066465
- WO-A-2006/099260
- US-A- 4 960 216

## Description

### BACKGROUND OF THE INVENTION

### FIELD OF THE INVENTION

The invention relates generally to a sealing member for closing the mouth of a container, the sealing member having a graspable tab on its upper surface to expedite its removal from the container.

### DESCRIPTION OF THE RELATED ART

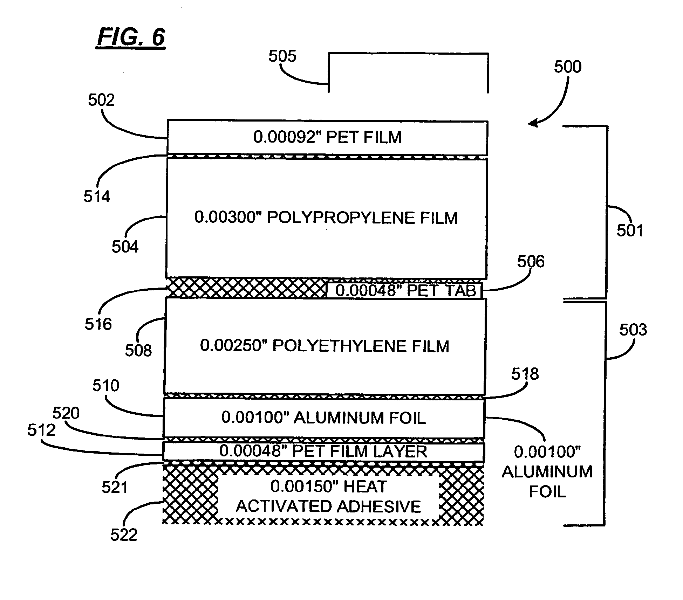

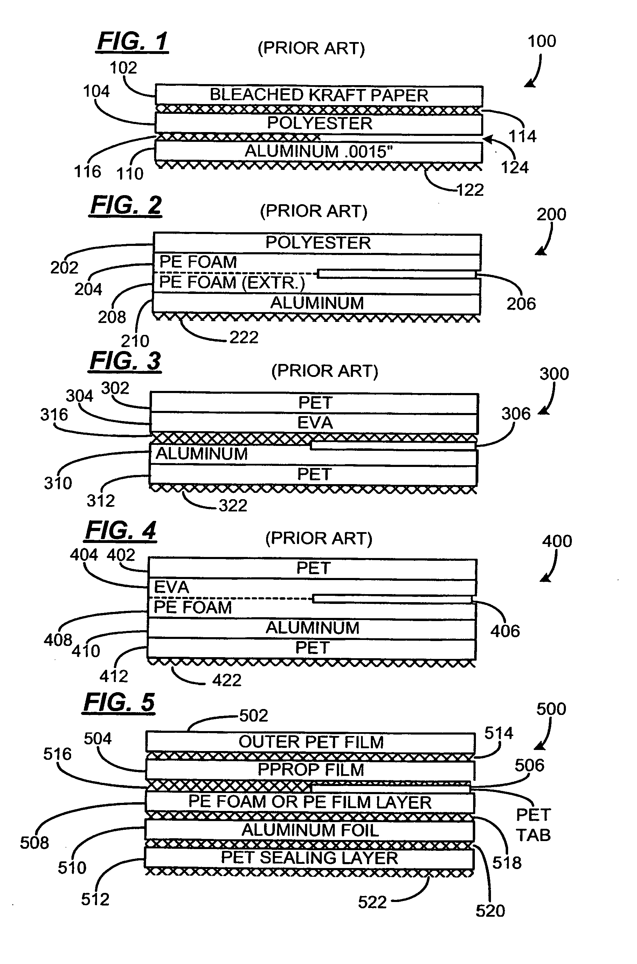

In the figures, the last two digits of the reference numbers for elements that correspond in the various figures always match. Hence, the hot melt bonding material or adhesive layer, which is essentially the same in all of the figures, is assigned the reference number 122 in Figure 1, 222 in Figure 2, 322 in Figure 3, 422 in Figure 4, and 522 in Figures 5 and 6. Once such an element has been described with respect to one figure, the description of that element is incorporated by reference into the descriptions of corresponding elements of other figures unless the text or context indicates otherwise.

It is often desirable to seal a bottle, jar, or other container having a screw-on cap by providing a sealing member that attaches across the mouth of the container before the cap is screwed down onto the container for the first time. When the cap is later removed after purchase, the purchaser must penetrate, break, or otherwise remove the sealing member before the contents of the container may be accessed. The cap may then be screwed back into place to keep the contents fresh and to keep the contents from spilling out. If the sealing member is not present when the container is first opened, or if it is damaged, then the purchaser knows that the contents of the container may have been tampered with.

Many such sealing members are known which have tabs attached to their upper surface to facilitate their removal. One simply grasps the tab and pulls it to one side, and the entire sealing member is removed from the container in a single motion.

U.S. Patent No. 5,514,442, which issued to Michael P. Galda, et al. on May 7, 1996 discloses the sealing member 100 shown in Figure 1 (which is derived from Figure 4 of the '442 patent). The sealing member 100 is a laminated structure the lower half of which is formed from a 0.0381 mm (0.00150") thick aluminium foil layer 110 the underside of which is bonded to a hot melt bonding material or adhesive layer 122. The upper half of the sealing member 100 is formed from a 0.1016 mm (0.00400") thick sheet of bleached kraft paper 102 (having a nominal weight of 23.5868 kg (52 pounds) the lower half of which is glued (by means of adhesive layer 114) to a 0.0254 mm (0.00100") thick polyester layer 104 (most likely a sheet or film of PET, or Polyethylene Terephthalate). As shown, the upper and lower halves of the sealing member 100 are joined by means of an adhesive layer 116 (Spenbond adhesive 650/651, supplied by NL Chemicals - 650 is a water dispersed urethane-laminating adhesive, and 651 is a water dispersible curing agent for the adhesive) which extends only half way (left-to-center) which joins the aluminium foil layer 110 to the polyester layer 104, leaving a gap 124 to the right. The sealing member 100 is circular and is die-cut from a much larger sheet of laminated materials, the cutting being positioned to cause the gap 124 to be present in each sealing member 100, thereby forming a removal tab that comprises the kraft paper 102 and the polyester 104 layer above the gap 124 to the right in Figure 1. The '442 patent goes on to teach that this circular sealing member 100 is inserted deep into the screw-on cap (not shown) which is then screwed onto the container (not shown). Induction heating applied to the neck of the container then heats up the aluminium foil layer 110, causing the hot melt bonding material or adhesive layer 122 to melt and thereby seal the sealing member 100 to the top of the container. After the container is purchased, the purchaser removes the cap and then grasps and pulls on the removal tab and thereby removes the sealing member 100 from the container.

U.S. Patent No. 5,702,015, which issued to Joseph M. Giles, *t al.* on December 30, 1997, teaches a somewhat different design for a sealing member 200 that is shown in Figure 2 (which is derived from Figures 1 and 3 of the '015 patent). In Figure 1, the adhesive layer 116 may sometimes fail during tab removal, leaving the sealing member 100 still at least partially attached to the container. To provide a stronger seal between the upper and lower halves of the sealing member, the sealing member 200 shown in Figure 2 coats the aluminium foil 210 with a PE (polyethylene) foam layer 208. The upper half of the sealing member 200 comprises a polyester (again probably PET) upper layer 202 glued to a second PE (polyethylene) foam layer 204. A release layer 206 is inserted between the two PE foam layers 204 and 208 over half their length, as is shown. This release layer 206 is formed from a material that resists bonding to at least one of the PE foam layers 204 and 208. The upper and lower halves of the sealing member 200 are joined by heating the layers 204 and 208 during manufacture so that the layers 204 and 208 merge and become one thicker PE foam layer in the left half of the sealing member 200, thus forming a joining of the upper and lower halves of the sealing member 200 without an adhesive layer (such as the layer 116 shown in Figure 1). The two layers 204 and 208 are separated from each other by the release layer 206 (to the right in Figure 2), and hence a removal tab is formed in the upper right half of the sealing member 200. The resulting removal tab structure is stronger than that shown in Figure 1 because the merger of the two layers 204 and 208 in Figure 2 (both formed from PE foam) is stronger than the adhesive bond layer 116 in Figure 1. During manufacture of the sealing member 200, the PE foam layer 208 is extruded between the upper and lower remaining laminated sheets.

U.S. Patent No. 6,866,926, which issued to Joe Smelko et al on March 15, 2005, includes a "prior art" sealing member 300 which is shown in Figure 3 (this figure corresponds to Figure 2 of the '926 patent). The upper layers of the sealing member 300 comprise an upper PET layer 302 (which could be 0.254 mm (0.00100") thick) which is bonded to a lower EVA (ethylene-vinyl acetate) layer 304 (that could be 0.0508 mm (0.00200") thick). The lower layers comprise an aluminium foil layer 310 (that could be 0.0254 mm (0.00100") thick) that is bonded to a PET layer 312 (which could be 0.0127 mm (0.00050") thick) and which in turn is bonded to a hot melt bonding material or adhesive layer 322 (that could be 0.0381 mm (0.00150") thick). These upper and lower layers are bonded together by means of the bottom surface of the EVA layer 316 which "is surface treated and bonded to foil layer" ('926 patent, col. 1, lines 37-39), possibly by an adhesive layer 316 similar in function to the layer 116 in Figure 1. A paper release layer 306 lies on top of the aluminium foil layer 310 in the right half of the sealing member 300 and prevents attachment of the upper EVA layer 304 to the lower foil layer 310. This forms a removal tab to the right.

With reference to Figure 4, the '926 patent teaches how to improve on the sealing member shown in Figure 3 by adding a PE foam layer 408 (which could be 0.127 mm (0.00500") thick) over the upper surface of the aluminium foil layer 410, as is illustrated in Figure 4 (which corresponds to Figure 3 of the '926 patent). This PE (polyethylene) foam layer 408 (shown in Figure 4) is essentially identical in positioning and function to the PE foam layer 208 (shown in Figure 2 and described above). The EVA layer 404 is heat bonded to the new PE foam layer 408 in a manner similar to that illustrated in Figure 2, where the PE foam layer 208 is shown heat bonded to the extruded PE foam layer 408. However, less heating and temperature is required in Figure 4 to achieve this bond, since the EVA layer 404 (Figure 4) softens and bonds at a lower temperature than does the PE foam layer 204 (Figure 2). A good bond is achieved, since EVA and PE both contain polyethylene. The release strip 406 is made of PET 0.01143 mm to 0.0254 mm thick (0.00045" to 0.00100" thick) and is coated on its underside with a silicon release coating to prevent the strip 406 from sticking to the PE foam layer 410. The release strip 406 forms the underside of a tab.

In the design shown in Figure 4, the tab strength is dependant primarily upon the strength and thickness of the upper PET layer 402, which is 0.023368 mm (0.00092") thick in one embodiment. The EVA layer 404 is reduced in thickness over the land area of the container during the induction sealing process, and this reduces any EVA reinforcing of the tab in that area, which is the area where the tab gets stressed first when it is pulled to remove the sealing member 400. The EVA layer 404 is also quite soft because of its high vinyl acetate content, and accordingly it does not contribute significantly to tab strength in this design. The EVA layer can also shrink and become even less effective following the inductive heating step which seals the sealing member 400 to a container, as was (explained in the description of Figure 1).

A prior art container closure comprising certain features of the present invention is disclosed in WO 03/066465, which prior art teaching provides for a one-component seal and wadding system for a screw-cap, including a seal having lower layers forming an induction heating sealable system for attaching the seal to the neck of a container, a seal substrate including a free tab lying wholly within the circumference of the seal, a layer of wadding, and an attachment means including a release layer for attaching the seal substrate including the tab to the wadding.

### SUMMARY OF THE INVENTION

In at least one of its embodiments, the invention relates to a sealing member for a container comprising a heat actuated sealant or adhesive layer for securing the sealing member to a container, a metal foil layer over and covering and adhesively bonded to the heat actuated sealant or adhesive layer, and a polyethylene or polypropylene foam or film layer over and covering and adhesively bonded to the foil layer. In addition, a first PET tab defining layer lies over and covers at least a portion of, but is not adhesively bonded to at least part of that portion of, the polyethylene or polypropylene foam or film layer. Also a polypropylene film layer lies over and covers and is adhesively bonded to both the portion of the polyethylene or polypropylene foam or film layer not covered by the first PET tab defining layer and also to the first PET tab defining layer itself, the bonds being established by an adhesive resin and catalyst chosen to provide a high bonding strength sufficient to hold against a manually generated force. A second PET layer lies over and covers and adhesively bonds to the polypropylene film layer. The first PET tab defining layer and the portions of the propylene film and second PET layers immediately above and adhesively bonded to the first PET tab defining layer serve as a tab to facilitate removal of the sealing member from a container to which it has been adhered.

### BRIEF DESCRIPTION OF THE DRAWINGS

Figures 1 through 4 each present a side view of a prior art sealing member having a removal tab structure oriented to face to the right in the Figure. The vertical dimensions are exaggerated and are not drawn in proportion to the actual vertical dimensions of each layer of the sealing member.

Figure 5 presents a side view of a sealing member in accordance with an embodiment of the invention having a removal tab structure oriented to face to the right in the Figure. The vertical dimensions are exaggerated and are not drawn in proportion to the actual vertical dimensions of each layer of the sealing member.

Figure 6 presents a side view of the sealing member in accordance with an embodiment of the invention that was illustrated in Figure 5 and that has a removal tab structure oriented to face to the right in the Figure. The vertical dimensions are exaggerated, but they are drawn in approximate proportion to the actual vertical dimensions of each layer of the sealing member to illustrate the relative thicknesses of the layers.

### DETAILED DESCRIPTION OF THE EMBODIMENTS.

An embodiment of the invention according to claim 1 is presented in Figures 5 and 6. Figure 5 is provided to facilitate comparing the invention to the prior art designs presented in Figures 1 to 4. Figure 6 contains additional details of the design. The description which follows will refer only to Figures 5 and 6.

Referring now to Figure 6, there is shown the details of the layered structure of a sealing member 500 designed in accordance with an embodiment of the present invention.

The sealing member 500 is formed in two parts: an upper removal tab section 501 and a lower sealing section 503. The right half of the upper section 501 forms a removal tab 505, as has been explained.

The lower sealing section 503 includes three or four layers which are cemented together using 2 to 3 grams standard urethane adhesive.

Lying at the heart of the lower sealing section 503 is an upper aluminum foil layer 510 which is 0.0254 mm (0.00100") thick and which seals the container. Optionally, beneath the layer 510 is a layer 512 that is formed from a 0.012192 mm (0.00048") (48 gauge) PET film (polyethylene terephthalate film - Melinex 800C). This optional layer 512 forms a good gas barrier and a fair moisture barrier, but its primary purpose is not to act as a sealing layer but to prevent chemicals such as acidic components that have the ability to corrode aluminum from coming into contact with the aluminum foil layer 510. The PET film layer 512 prevents any acidic substances within the container from corroding the aluminum foil layer 510.

A hot melt bonding material or adhesive layer 522 is placed below the PET film layer 512, if present, or beneath the aluminum foil layer510 if the layer 512 is not present. The adhesive layer 522 is 0.0381 mm (0.00150") thick, and it may be placed around the peripheral edge of the PET layer 512 where the PET layer comes in contact with the mouth of the container (not shown). The heat activated hot melt bonding material or adhesive layer 522 was obtained from New England Extrusion (Turner Falls, Massachusetts). The layer 522 is a 0.0381 mm (0.00150") thick co-extruded blown sealant film. Variations of this film may be as thick as 0.0762 mm (0.00300"). The layer 522 may be composed of layers of MDPE/LDPE/18%Eva (35/45/20-70/30 HDPE/LDPE outer, 80/20 core) The layer 522 is specifically designed and chosen to seal to polyethylene and polypropylene containers. The exact composition may vary, and similar co-extruded films can be manufactured as blown films obtained from other vendors using various polymer compositions. Other suppliers of similar co-extruded films include Pliant and Imaflex. The material chosen is dependent upon the composition of the container.

Another option is to purchase an extrusion or solvent heat seal coated with polyester film from suppliers such as DuPont (Mylar CL or OL) or Toray (XL4, XL5). These films can act both as the adhesive layer 522 and as a substitute for the PET layer 512, thus eliminating the need of providing the separate PET layer 512 to protect the aluminum foil layer from corrosion.

Another possible heat activated adhesive is an ionomer that softens as it is heated such as Surlyn (trademark) of E. I. DuPont DeNemours & Company. Many other suitable heat activated adhesives are known to those skilled in the art.

Above the aluminum foil layer 510 there is a polyethylene film layer 508 that is 0.0635 mm (0.00250") thick (Imaflex - 70% HDPE). This layer could also be formed from polyethylene foam. In this design, this layer can be thinner than it has been customary to make this layer in prior art designs, since there is no EVA layer that is more sensitive to high temperatures than the remaining layers. But this layer must still contribute to insulation of heat generated during the inductively-induced heating of the aluminum foil to bond the sealing member 500 to a container, preventing as much as possible of that heat from reaching the upper removable tab section 501 of the sealing member 500.

The upper removable tab section 501 contains three layers. Lying at the heart of the section 503 is a PP or polypropylene film layer 504 that is 0.0762 mm (0.00300") thick (clear New England Extrusion polypropylene blown film C328 grade). This layer 504, among other things, adds insulation properties to the overall structure, reducing heat transfer to the inner area of the sealing member 500. The PP layer 504 is sandwiched in between an upper PET (polyethylene terephthalate) layer 502 that is 0.023368 mm (0.00092") thick (92 gauge - Toray PA 10 or DuPont LBT) and a lower PET tab layer 506 that is 0.012192 mm (0.00048") thick (48 gauge). The PP layer 502 extends over the entire upper surface of the section 503, as is shown. The PET tab 506, on the other hand, only extends over about half of the tab 505 part of the sealing section 503 and thus defines the size and the extent of the liftable tab 505. In Figures 5 and 6, the PET tab 506 is shown extending over the right side, or tab 505 side, of the section 503, and it extends from the right side only to the center of the secton 503. Variations in the size and shape of the PET tab 506 are, of course, permissible and desirable, as is illustrated in Figures 6, 7, and 8 and the accompanying text of U.S. Patent No. 5,514,442 cited above.

The bond 514 between the PET layer 502 and the PP layer 504 is formed from the same adhesive that is used in the bonds 518, 520 and 521 (2 or 3 grams standard urethane adhesive).

The upper removable tab section 501 and the lower sealing section 503 are bonded together by an adhesive 516 carefully selected to give the maximum possible strength to this bond. This adhesive is a two-part urethane adhesive system. It must produce a bond value of 1.3513115 kN/m (3500 g/in), and most advantageously a bond value of 1.54436 kN/m (4000 g/in) or above. COIM Novacote 250A adhesive resin was chosen and was treated with COIM Novacote 375S catalyst. COIM Novacote 253 adhesive has also been used, again with the 375S catalyst. Adhesives with similar characteristics could be produced by other adhesive manufacturers.

Note in Figure 6 that in the left half of the sealing member 500, the adhesive layer 516 bonds the upper removable tab section 501 directly to the lower sealing section 503. It does this by bonding the PP layer 504 directly to the PE layer 508 over the left half of the width of the sealing member 500. In the right half of the sealing member 500, the adhesive layer 516 bonds the PP layer 504 to the PET tab 506, rather than to the PE layer 508. The lower surface of the PET tab 506 is not bonded to the PE film 508. Accordingly, the right half of the removable tab section 501 is formed into the lifting tab 505, comprising the right half of the PP film layer 504 sandwiched between the two PET layers 502 and 506. The tab 505 so formed may be pulled up and used to remove the entire sealing member 500 from the container. In this design, both the outer PET film layer 502 and the PP film layer 504 jointly contribute to the strength of the connection formed between the tab 505 and the remainder of the sealing member 500. The strength of adhesive layer 516 insures a strong bond between the upper removable tab section 501 and the lower sealing section 503 of the sealing member 500. The high melt point of the PE foam or film layer 508 preserves the integrity of this layer, while its insulative characteristics protect the upper layers from heat damage, and the higher melt point characteristics of the PP film layer 504 (in comparison to the melt point characteristics of the EVA layer 404 - Figure 4 - used in earlier designs) contributes to both the strength and the stability of the removable tab section.

While Figures 5 and 6 and the detailed description presented above illustrate a particular embodiment of the invention, those skilled in the art will recognize that modifications and variations will also fall within the scope of the invention. For example, the thicknesses of the various layers may be varied. The PET film layer 502 can be 0.023368 mm (0.00092") (92 gauge), 0.012192 mm (0.00048") (48 gauge), or 0.011176 mm (00044") (48 gauge), for example, and can be constructed from DuPont LBT or DuPont 800C or Toray PA10. The polypropylene film layer 504 may range in thickness from 0.0508 mm (0.00200") (2.0 mil) to 0.1524 mm (0.00600") (6.0 mil) thick, for example, dependent upon the overall desired thickness of the structure. It is a monolayer polypropylene blown film supplied by New England Extrusions. It can also be a co-extruded film composed of HDPE and polypropylene, or it can be another polyethylene or foam layer of similar thickness.

Other materials may be substituted for those shown in Figures 5 and 6. For example, the PET film 502 and the PET tab 506 may be DuPont Melinex 800C or Toray PA10. The polyethylene film or foam layer 508 could be polyethylene film with a thickness ranging from 0.0508 mm to 0.1524 mm (0.00200" to 0.00600") or polypropylene film or a co-extruded film comprised of both polyethylene and polypropylene. This material can be replaced with polyethylene foam or polypropylene foam from 0.0762 to 0.2286 mm (0.00300" to 0.00900") thick. As this material is an insulating or heat distribution layer, the melt point of the material is important. A polyethylene film or foam blend advantageously may be composed of 70% HDPE blended with MDPE. By controlling the melt point of this layer it is possible to insure that the polymer will not melt upon induction sealing and will not squeeze out and melt to the inside of the closure, resulting in high sealing member removal torques. The melt point of the film or foam should be at least 125 degrees Celsius and above.

## Claims

1. A sealing member (500) for a container comprising:
a heat actuated sealant or adhesive layer (522) means for securing the sealing member to a container;
a metal foil layer (510) over and covering and adhesively bonded to the heat actuated sealant or adhesive layer means;
a polyethylene or polypropylene foam or film layer (508) over and covering and adhesively bonded to the foil layer;
a first PET tab defining layer (506) over and covering at least a portion of, but not adhesively bonded to at least part of that portion of, the polyethylene or polypropylene foam or film layer;
a polypropylene film layer (504) over and covering and adhesively bonded to both the portion of the polyethylene or polypropylene foam or film layer not covered by the first PET tab defining layer and also to the first PET tab defining layer itself, the bonds being established by an adhesive resin and catalyst chosen to provide a high bonding strength sufficient to hold against a manually generated force; and
a second PET layer (502) over and covering and adhesively bonded to the polypropylene film layer;
whereby the first PET tab defining layer (506) and the portions of the propylene film (504) and second PET (502) layers immediately above and adhesively bonded to the first PET tab defining layer (506) serve as a tab (505) to facilitate removal of the sealing member from a container to which it has been adhered.

2. A sealing member (500) in accordance with claim 1 wherein the polypropylene film layer (504) is a blown film in the range of 0.0508 to 0.1524mm (0.002 to 0.006 inches) thick.

3. A sealing member (500) in accordance with claim 1 wherein the polyethylene or polypropylene foam or film layer (508) is 0.0508 to 0.1524mm (0.002 to 0.006 inches) thick.

4. A sealing member (500) in accordance with any preceding claim wherein the polypropylene film layer (504) and the polyethylene or polypropylene foam or film layer (508) are more than twice the thickness of any of the PET layers.

5. A sealing member (500) in accordance with any preceding claim wherein a third PET layer (512) lies between and is adhesively bonded to the heat activated sealant or adhesive layer (522) and the metal foil layer (510) to prevent corrosion of the metal foil layer (510).

6. The sealing member (500) of claim 1 wherein:
the heat actuated sealant or adhesive layer means (522) is a hot melt bonding material or adhesive layer that, when heated, can secure the sealing member (500) to the container, forming a seal to the container that can be broken through manual effort;
the polyethylene or polypropylene foam or film layer (508), has a melting point near to or above 125 degrees Celsius and is sufficiently thick to prevent heat from damaging the sealing member elements above this layer; and
wherein the bonding strength is near to or above 1.351315kN/m (3500 g/in);

7. A sealing member (500) in accordance with claim 1 or claim 6 wherein the polyethylene or polypropylene foam or film layer (508) is polyethylene film.

8. A sealing member (500) in accordance with claim 1 or claim 6 wherein the polyethylene or polypropylene foam or film layer (508) is polyethylene foam.

9. A sealing member (500) in accordance with claim 6 wherein the polyethylene or polypropylene foam or film layer (508) is polypropylene film.

10. A sealing member (500) in accordance with claim 6 wherein the polyethylene or polypropylene foam or film layer (508) is polypropylene foam.

11. A sealing member (500) in accordance with claim 6 wherein the polyethylene or polypropylene foam or film layer (508) is a co-extruded film comprised of both polyethylene and polypropylene.

12. A sealing member (500) in accordance with claim 6 wherein the polyethylene or polypropylene foam or film layer (508) is a blend comprising approximately 70% HDPE blended with MDPE.

13. A sealing member (500) in accordance with claim 6 wherein the polyethylene or polypropylene film or foam layer (508) is a blown film in the range of 0.0508 to 0.1524mm (0.002 to 0.006 inches) thick.

14. A sealing member (500) in accordance with claim 6 wherein the polyethylene or polypropylene film or foam layer (508) is a foam layer in the range of 0.0762 to 0.2286mm (0.003 to 0.009 inches) thick.

15. A sealing member (500) in accordance with claim 6 wherein the polypropylene film layer (504) is a polypropylene blown film in the range of 0.0508 to 0.1524mm (0.002 to 0.006 inches) thick.

16. A sealing member (500) in accordance with claim 6 wherein the polypropylene film layer (504) is a co-extruded film comprising HDPE and polypropylene.

17. A sealing member (500) in accordance with claim 6 wherein the adhesive resin and catalyst that bonds the polypropylene film layer (504) to the portion of the polyethylene or polypropylene foam or film layer (508) not covered by the first PET tab defining layer (506) and also to the first PET tab defining layer (506) has a bonding strength near to or above 1.54436kN/m (4000 g/in).

18. A sealing member (500) in accordance with claim 6 wherein the sealing layer further comprises an acid blocking PET (512) layer inserted in between the metal foil layer (510) and the hot melt bonding material or adhesive layer (522) to prevent corrosion of the metal foil layer (510).

## Patentansprüche

1. Versiegelungsteil (500) für einen Behälter, umfassend:
eine wärmeaktivierte Versiegelungsmittel- oder Klebstoffschicht- (522) Möglichkeit zum Befestigen des Versiegelungsteils an einen Behälter;
eine Metallfolienschicht (510) über der wärmeaktivierten Versiegelungsmittel- oder Klebstoffschichtmöglichkeit und diese bedeckend und haftend an sie bondiert;
eine Polyethylen- oder Polypropylenschaumstoff- oder -folienschicht (508) über der Folienschicht und diese bedeckend und haftend an sie bondiert;
eine erste PET-Lasche definierende Schicht (506) über mindestens einem Abschnitt des, und diesen bedeckend, jedoch nicht an mindestens einen Teil dieses Abschnitts der Polyethylen- oder Polypropylenschaumstoff- oder -folienschicht haftend bondiert;
eine Polypropylenfolienschicht (504) über sowohl dem Abschnitt der Polyethylen- oder Polypropylenschaumstoff- oder -folienschicht, der nicht durch die erste PET-Lasche definierende Schicht bedeckt ist, und diesen bedeckend und haftend daran bondiert und auch an die erste PET-Lasche definierende Schicht selbst, wobei die Bindungen durch ein Klebstoffharz und einen Katalysator hergestellt werden, die so gewählt werden, dass eine hohe Bondierstärke bereitgestellt wird, die ausreicht, um einer von Hand erzeugten Kraft standzuhalten; und
eine zweite PET-Schicht (502) über der Polypropylenfolienschicht und diese bedeckend und haftend daran bondiert;
wodurch die die erste PET-Lasche definierende Schicht (506) und die Abschnitte der Propylenfolien- (504) und zweiten PET- (502) Schichten direkt über der ersten PET-Lasche definierenden Schicht (506) und haftend daran bondiert als Lasche (505) dienen, um das Entfernen des Versiegelungsteils von einem Behälter, an dem es angeheftet worden ist, erleichtert.

2. Versiegelungsteil (500) nach Anspruch 1, wobei die Polypropylenfolienschicht (504) eine Blasfolie einer Dicke im Bereich von 0,0508 bis 0,1524 mm (0,002 bis 0,006 Zoll) ist.

3. Versiegelungsteil (500) nach Anspruch 1, wobei die Polyethylen- oder Polypropylenschaumstoff- oder -folienschicht (508) eine Dicke im Bereich von 0,0508 bis 0,1524 mm (0,002 bis 0,006 Zoll) aufweist.

4. Versiegelungsteil (500) nach einem der vorhergehenden Ansprüche, wobei die Polypropylenfolienschicht (504) und die Polyethylen- oder Polypropylenschaumstoff- oder -folienschicht (508) mehr als das Zweifache der Dicke irgendwelcher der PET-Schichten aufweisen.

5. Versiegelungsteil (500) nach einem der vorhergehenden Ansprüche, wobei eine dritte PET-Schicht (512) zwischen der wärmeaktivierten Versiegelungsmittel- oder Klebstoffschicht (522) und der Metallfolienschicht (510) liegt und haftend daran bondiert ist, um die Korrosion der Metallfolienschicht (510) zu verhindern.

6. Versiegelungsteil (500) nach Anspruch 1, wobei:
die wärmeaktivierte Versiegelungsmittel- oder Klebstoffschichtmöglichkeit (522) eine Heißschmelzbondiermaterial- oder Klebstoffschicht ist, das/die, wenn erhitzt, das Versiegelungsteil (500) an dem Behälter befestigen kann unter Bildung eines Siegels an den Behälter, das durch manuelle Leistung gebrochen werden kann;
die Polyethylen- oder Polypropylenschaumstoff- oder -folienschicht (508) einen Schmelzpunkt in der Nähe von oder über 125 Grad Celsius aufweist und ausreichend dick ist, um zu verhindern, dass Wärme die Versiegelungsteilelemente über dieser Schicht beschädigt; und
wobei die Bondierstärke in der Nähe von oder über 1,351315 kN/m (3500 g/Zoll) liegt.

7. Versiegelungsteil (500) nach Anspruch 1 oder Anspruch 6, wobei die Polyethylen- oder Polypropylenschaumstoff- oder -folienschicht (508) eine Polyethylenfolie ist.

8. Versiegelungsteil (500) nach Anspruch 1 oder Anspruch 6, wobei die Polyethylen- oder Polypropylenschaumstoff- oder -folienschicht (508) ein Polyethylenschaumstoff ist.

9. Versiegelungsteil (500) nach Anspruch 6, wobei die Polyethylen- oder Polypropylenschaumstoff oder -folienschicht (508) eine Polypropylenfolie ist.

10. Versiegelungsteil (500) nach Anspruch 6, wobei die Polyethylen- oder Polypropylenschaumstoff oder -folienschicht (508) ein Polypropylenschaumstoff ist.

11. Versiegelungsteil (500) nach Anspruch 6, wobei die Polyethylen- oder Polypropylenschaumstoff oder -folienschicht (508) eine coextrudierte Folie ist, die sowohl aus Polyethylen als auch Polypropylen besteht.

12. Versiegelungsteil (500) nach Anspruch 6, wobei die Polyethylen- oder Polypropylenschaumstoff oder -folienschicht (508) eine Mischung ist, die etwa 70 % HDPE, das mit MDPE vermischt ist, umfasst.

13. Versiegelungsteil (500) nach Anspruch 6, wobei die Polyethylen- oder Polypropylenfolien- oder -schaumstoffschicht (508) eine Blasfolie einer Dicke im Bereich von 0,0508 bis 0,1524 mm (0,002 bis 0,006 Zoll) ist.

14. Versiegelungsteil (500) nach Anspruch 6, wobei die Polyethylen- oder Polypropylenfolien- oder -schaumstoffschicht (508) eine Schaumstoffschicht einer Dicke im Bereich von 0,0762 bis 0,2286 mm (0,003 bis 0,009 Zoll) ist.

15. Versiegelungsteil (500) nach Anspruch 6, wobei die Polypropylenfolienschicht (504) eine Polypropylenblasfolie einer Dicke im Bereich von 0,0508 bis 0,1524 mm (0,002 bis 0,006 Zoll) ist.

16. Versiegelungsteil (500) nach Anspruch 6, wobei die Polypropylenfolienschicht (504) eine coextrudierte Folie ist, die HDPE und Polypropylen umfasst.

17. Versiegelungsteil (500) nach Anspruch 6, wobei das Klebstoffharz und der Katalysator, die die Polypropylenfolienschicht (504) an den Abschnitt der Polyethylen- oder Polypropylenschaumstoff- oder -folienschicht (508), der nicht von der ersten PET-Lasche definierenden Schicht (506) bedeckt ist, und auch an die erste PET-Lasche definierende Schicht (506) bondieren, eine Bondierstärke in der Nähe von oder über 1,54436 kN/m (4000 g/Zoll) aufweisen.

18. Versiegelungsteil (500) nach Anspruch 6, wobei die Versiegelungsschicht des Weiteren eine säureblockierende PET- (512) Schicht umfasst, die zwischen die Metallfolienschicht (510) und die Heißschmelzbondiermaterial- oder -klebstoffschicht (522) eingeschoben ist, um die Korrosion der Metallfolienschicht (510) zu verhindern.

## Revendications

1. Élément de fermeture étanche (500) destiné à un récipient comprenant:
un moyen de type agent ou couche adhésive activé(e) par la chaleur (522) pour fixer solidement l'élément de fermeture étanche à un récipient;
une couche de type feuil métallique (510) par dessus et recouvrant et liée de manière adhésive au moyen de type agent ou couche adhésive activé(e) par la chaleur;
une couche de mousse ou de film de polyéthylène ou de polypropylène (508) par dessus et recouvrant et fixée de manière adhésive à la couche de type feuil;
une première couche en PET définissant une languette (506) par dessus et recouvrant au moins une portion de, mais non fixée de manière adhésive à au moins une partie de cette portion de, la couche de mousse ou de film de polyéthylène ou de polypropylène;
une couche de film de polypropylène (504) par dessus et recouvrant et fixée de manière adhésive à la fois à la portion de la couche de mousse ou de film de polyéthylène ou de polypropylène non recouverte par la première couche en PET définissant une languette et également à la première couche en PET définissant une languette elle-même, les liaisons étant établies à l'aide d'une résine adhésive et d'un catalyseur choisis pour fournir une résistance de liaison élevée suffisante pour résister à une force produite manuellement; et
une seconde couche en PET (502) par dessus et recouvrant et fixée de manière adhésive à la couche de film de polypropylène;
moyennant quoi la première couche en PET définissant une languette (506) et les portions du film de propylène (504) et des secondes couches en PET (502) immédiatement au-dessus et fixées de manière adhésive à la première couche en PET définissant une languette (506) servent de languette (505) pour faciliter le retrait de l'élément de fermeture étanche d'un récipient auquel il a été placé en adhésion.

2. Élément de fermeture étanche (500) conformément à la revendication 1, dans lequel la couche de film de polypropylène (504) est un film soufflé dans la plage de 0,0508 à 0,1524 mm (0,002 à 0,006 pouce) d'épaisseur.

3. Élément de fermeture étanche (500) conformément à la revendication 1, dans lequel la couche de mousse ou de film de polyéthylène ou de polypropylène (508) est d'une épaisseur de 0,0508 à 0,1524 mm (0,002 à 0,006 pouce).

4. Élément de fermeture étanche (500) conformément à l'une quelconque des revendications précédentes, dans lequel la couche de film de polypropylène (504) et la couche de mousse ou de film de polyéthylène ou de polypropylène (508) ont plus de deux fois l'épaisseur de n'importe laquelle des couches en PET.

5. Élément de fermeture étanche (500) conformément à l'une quelconque des revendications précédentes, dans lequel une troisième couche en PET (512) s'étend entre et est fixée de manière adhésive à l'agent ou à la couche adhésive activé(e) par la chaleur (522) et à la couche de feuil métallique (510) pour éviter la corrosion de la couche de feuil métallique (510).

6. Élément de fermeture étanche (500) selon la revendication 1, dans lequel:
le moyen de type agent ou couche adhésive activé(e) par la chaleur (522) est un matériau de liaison thermofusible ou une couche adhésive qui, lorsqu'il(elle) est chauffé(e), peut solidement fixer l'élément de fermeture étanche (500) au récipient, formant un joint au niveau du récipient qui peut être brisé par effort manuel;
la couche de mousse ou de film de polyéthylène ou de polypropylène (508) a un point de fusion proche ou situé au-dessus de 125 degrés Celsius et est suffisamment épais(se) pour empêcher la chaleur d'endommager les éléments de fermeture étanche au-dessus de cette couche; et
dans lequel la force de liaison est proche ou située au-dessus de 1,351315 kN/m (3 500 g/po).

7. Élément de fermeture étanche (500) conformément à la revendication 1 ou la revendication 6, dans lequel la couche de mousse ou de film de polyéthylène ou de polypropylène (508) est un film de polyéthylène.

8. Élément de fermeture étanche (500) conformément à la revendication 1 ou la revendication 6, dans lequel la couche de mousse ou de film de polyéthylène ou de polypropylène (508) est une mousse de polyéthylène.

9. Élément de fermeture étanche (500) conformément à la revendication 6, dans lequel la couche de mousse ou de film de polyéthylène ou de polypropylène (508) est un film de polypropylène.

10. Élément de fermeture étanche (500) conformément à la revendication 6, dans lequel la couche de mousse ou de film de polyéthylène ou de polypropylène (508) est une mousse de polypropylène.

11. Élément de fermeture étanche (500) conformément à la revendication 6, dans lequel la couche de mousse ou de film de polyéthylène ou de polypropylène (508) est un film co-extrudé composé à la fois de polyéthylène et de polypropylène.

12. Élément de fermeture étanche (500) conformément à la revendication 6, dans lequel la couche de mousse ou de film de polyéthylène ou de polypropylène (508) est un mélange comprenant approximativement 70 % de HDPE mélangé à du MDPE.

13. Élément de fermeture étanche (500) conformément à la revendication 6, dans lequel la couche de mousse ou de film de polyéthylène ou de polypropylène (508) est un film soufflé d'une épaisseur située dans la plage de 0,0508 à 0,1524 mm (0,002 à 0,006 pouce).

14. Élément de fermeture étanche (500) conformément à la revendication 6, dans lequel la couche de mousse ou de film de polyéthylène ou de polypropylène (508) est une couche de mousse d'une épaisseur située dans la plage de 0,0762 à 0,2286 mm (0,003 à 0,009 pouce).

15. Élément de fermeture étanche (500) conformément à la revendication 6, dans lequel la couche de film de polypropylène (504) est un film soufflé de polypropylène d'une épaisseur située dans la plage de 0,0508 à 0,1524mm (0,002 à 0,006 pouce).

16. Élément de fermeture étanche (500) conformément à la revendication 6, dans lequel la couche de film de polypropylène (504) est un film co-extrudé comprenant du HDPE et du polypropylène.

17. Élément de fermeture étanche (500) conformément à la revendication 6, dans lequel la résine adhésive et le catalyseur qui lient la couche de film de polypropylène (504) à la portion de la couche de mousse ou de film de polyéthylène ou de polypropylène (508) non recouverte par la première couche en PET définissant une languette (506) et également à la première couche en PET définissant une languette (506) a une force de liaison proche ou située au-dessus de 1,54436 kN/m (4 000 g/po).

18. Élément de fermeture étanche (500) conformément à la revendication 6, dans lequel la couche de scellement comprend en outre une couche en PET bloquant les acides (512) insérée entre la couche de feuil métallique (510) et le matériau de liaison ou la couche adhésive thermofusible (522) pour empêcher la corrosion de la couche de feuil métallique (510).
